Europäisches Patentamt

European Patent Office

Office européen des brevets

(11) Publication number: 0 237 243
A1

# (12) EUROPEAN PATENT APPLICATION

(21) Application number: 87301812.1

(22) Date of filing: 02.03.87

(51) Int. Cl.4: F16D 41/06

(30) Priority: 13.03.86 US 839238

(43) Date of publication of application:
16.09.87 Bulletin 87/38

(84) Designated Contracting States:
DE FR GB IT NL SE

(71) Applicant: Borg-Warner Automotive, Inc.
3001, West Big Beaver Road
Troy Michigan 48048(US)

(72) Inventor: Baumle, Rudolf Friedrich
515 E Orchard Lane
Arlington Heights Illinois 60005(US)

(74) Representative: Williams, Trevor John et al
J.A. KEMP & CO. 14 South Square Gray's Inn
London WC1R 5EU(GB)

(54) One-way roller clutch accordion spring with stabilizer.

(57) An overrunning or one-way roller clutch (10) having an outer race (11), an inner race (13), a cage (16) having transverse abutment walls defining pockets (19), a plurality of rollers (15) in the pockets, and a plurality of accordion springs (21) engaging the abutment walls and bearing against the rollers. Each spring includes a stabilizing tab (26) on the end (24) contacting the roller which cooperates with the outer race (11) for the clutch to prevent outward movement and consequent wear of the spring (21) on the outer race.

Fig. 2.

## ONE-WAY ROLLER CLUTCH ACCORDION SPRING WITH STABILIZER

This invention relates generally to overrunning or one-way roller clutches. In some applications of one-way roller clutches, the clutch cage is required to rotate rapidly along with a cammed inner race during its free wheel mode of operation. At the same time, the outer race is stationary or rotating in the opposite direction. The larger the diameter of the clutch and/or the higher the rotational speed of the clutch, the more effect centrifugal force has on the accordion springs biasing the rollers in the clutch cage. When the centrifugal force acting on the accordion springs is great enough, the springs move outwardly and contact the inner surface of the outer race. The resulting sliding of the accordion spring loops against the inner surface of the outer race causes wear on the loops.

Normally, an accordion spring is designed to have an inwardly acting force so as to resist the effect of centrifugal force during clutch rotation. This additional resisting force increases the stress in the already stressed accordion spring. When this condition is applied to a clutch application in which the outer race and inner race are not concentric with each other, the rollers and hence the accordion springs are severely cycled back and forth tending to fatigue the highly stressed accordion springs, which causes the springs ultimately to fail at the loops which are partially worn away because of sliding engagement with the inner surface of the outer race. The present invention reduces both the stress and wear patterns of the accordion springs in roller clutches.

The present invention relates to a one-way or overrunning roller clutch including an outer race, an inner race, a clutch cage positioned between the races, a plurality of clutch rollers in the cage engaging a smooth cylindrical surface on one race and a camming surface on the opposite race, and accordion springs each secured in the clutch cage and bearing against a clutch roller at the opposite ends thereof. To retain the accordion springs in position when subjected to centrifugal force, a stabilizer tab is provided on each spring end bearing against a roller with the tab contacting the smooth race surface. The spring tab acts so as not to appreciably increase the stress in the spring where the spring was already highly stressed due to the severe excursions of the roller because of eccentricity of the races.

The present invention also relates to a one-way or overrunning roller clutch wherein each accordion spring biasing a clutch roller has an added stabilizer tab extending outward from the spring to contact the smooth inside diameter of the outer race at an approximate angle of 25° with a tangent to the inner surface of the outer race at the contact point. Thus, the roller end of the accordion spring is confined in position, being trapped between the roller and the inside diameter of the outer race and, consequently, the spring loops will not easily come into contact with the outer race surface.

The present invention further relates to a one-way or overrunning roller clutch having an accordion spring for each roller with an extended stabilizer tab to prevent buckling in the middle of the spring and resulting bowing outwardly to contact the inner surface of the outer race. This extended stabilizer tab extends over the length of the accordion spring in a situation where the rotation of the roller clutch cage is extremely fast, the lengthened stabilizer tab becoming a barrier between the spring loops and the surface of the outer race.

Further objects are to provide a construction of maximum simplicity, efficiency, economy and ease of assembly and operation, and such further objects, advantages and capabilities which will later more fully appear and are inherently possessed thereby.

Figure 1 is a fragmentary elevational view partially in cross section of a conventional overrunning roller clutch.

Figure 2 is a fragmentary elevational view partially in cross section of an overrunning roller clutch with the improved accordion spring of the present invention.

Figure 3 is a fragmentary partially exploded perspective view of the roller clutch of Figure 2.

Figure 4 is a fragmentary elevational view partially in cross section of an overrunning roller clutch with an alternative embodiment of the improved accordion spring of the present invention.

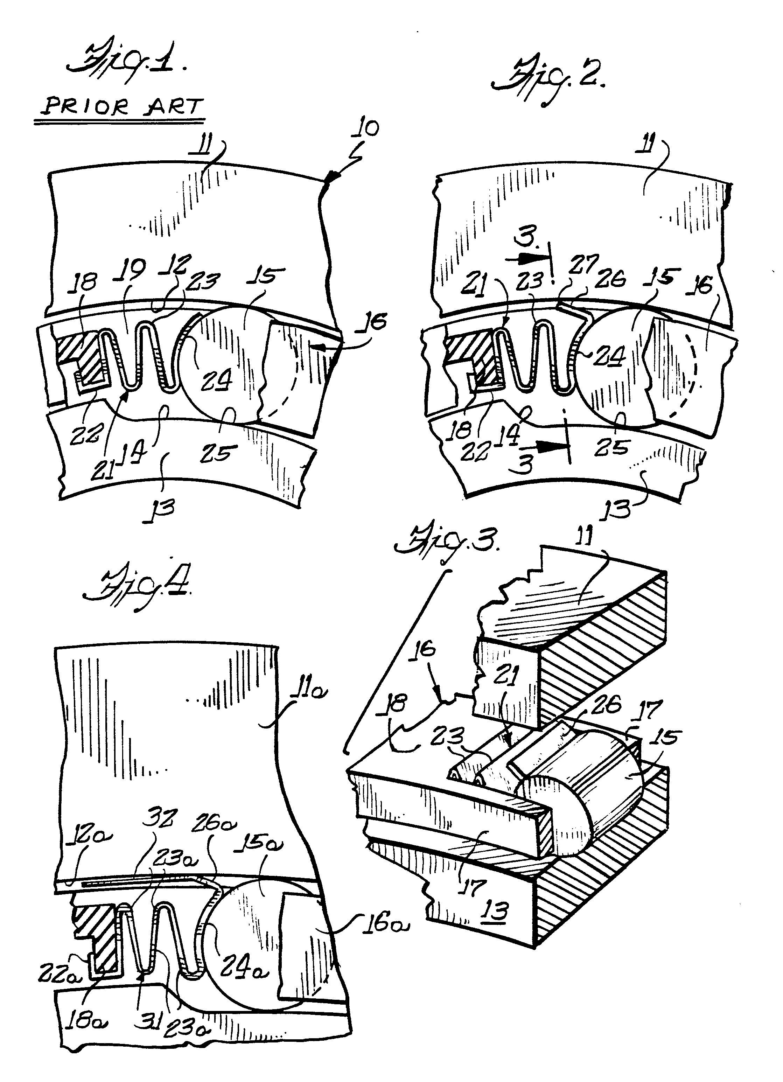

Referring more particularly to the disclosure in the drawings wherein are shown illustrative embodiments of the present invention, Figure 1 discloses a prior art overrunning roller clutch 10 including an outer race 11 having a smooth cylindrical inner surface 12, an inner race 13 having an outer surface 14 for actuation of a plurality of clutch rollers 15, and a generally circular clutch cage 16 having transversely extending cross-bars 18 connecting a pair of parallel rings 17,17; the cage being provided with circumferentially spaced openings 19 receiving the rollers 15 and accordion springs 21.

Each accordion spring 21 includes a clip portion 22 at one end which is hooked under and secured to a cross-bar 18, a plurality of loops 23 and an opposite curved end 24 which closely accommodates the surface of the roller 15; the spring biasing the roller into engagement with a camming portion 25 of the inner race surface 14. Where the accordion springs are subjected to centrifugal force resulting from rapid rotation of the clutch cage 16, the curved end 24 of the spring contacting the roller 15 has no effective means of combating outward displacement of the spring end under this centrifugal force. Thus, outward movement of the accordion spring would cause sliding engagement of the spring loops 23 with the surface 12 of the outer race 11 and wear of the loops.

Also, if the accordion spring 21 is designed to have an inward force resisting centrifugal force, this additional force increases the stress in the already stressed spring; especially where the inner and outer races are not concentric with one another. The result is that the rollers and springs are severely cycled back and forth tending to fatigue the highly stressed springs, which ultimately fail at the loops 23 that are partially worn away because of sliding contact with the outer race surface 12.

To furnish this needed support to the spring end 24, a stabilizer tab 26 (Figures 2 and 3) is added to the end 24, with the tab extending outwardly and rearwardly from the roller. The tab contacts the inner surface 12 of the outer race 11 at an angle of approximately 25° with a tangent to the inside diameter of the outer race at the contact point 27. The roller end 24 of the accordion spring is now confined in position, being trapped between the roller 15 and the inner surface 12 of the outer race 11. Consequently, the spring loops 23 will not easily come into contact with the inner surface of the outer race.

In certain situations, the rotation of the roller clutch cage may be so fast that the accordion spring, being stabilized at the roller end, may buckle in the middle and bow outwardly with the loops contacting the outer race inner surface. To protect and minimize wear of the accordion spring loops, an alternative spring 31 shown in Figure 4 is utilized, with like members having the same reference numerals with the addition of a script "a". Thus, each accordion spring 31 has a clip end portion 22a secured to a cross-bar 18a of the roller clutch cage 16a, a plurality of loops 23a, and an opposite curved end 24a contacting a clutch roller 15a with a stablizer tab 26a extending outwardly to contact the inner surface 12a of the outer race 11a. The stabilizer tab is lengthened to extend rearwardly, as at 32, over substantially the entire length of the accordion spring 31. The lengthened tab portion 32 provides a barrier between the accordion spring loops 23a and the outer race surface 12a. In either embodiment through the normal lubrication of the clutch, the oil thrown onto the inside surface 12 or 12a of the outer race 11 or 11a will minimize major wear of the stabilizer tab 26 or 26a and/or lengthened tab portion 32.

## Claims

1. In a roller clutch assembly (10) including an outer race (11), an inner race (13), an annular cage (16) having a plurality of transversely extending cross-bars (18) defining pockets (19) therebetween, a plurality of clutch rollers (15) received in said pockets, and a plurality of accordion clutch springs (21) each having one end (22) secured to a cage cross-bar (18), an opposite end (24) contacting a clutch roller (15) and a plurality of accordion loops (23) therebetween, the improvement comprising a stabilizing tab (26) formed on the roller contacting end (24) of the spring to prevent outward movement of the spring under the action of centrifugal force.

2. A roller clutch assembly as set forth in Claim 1, wherein said roller contacting spring end (24) is curved to conformably engage the roller (15) and said stabilizer tab (26) extends upwardly and rearwardly from the roller.

3. A roller clutch assembly as set forth in Claim 2, wherein said stabilizer tab (26) is formed on the roller contacting end (24) of the spring (21) and contacts the outer race (11) at an angle of approximately 25° with the tangent to the inside diameter of the outer race at the contact point (27).

4. A roller clutch assembly as set forth in Claim 3, wherein said outer race (11) has an inner cylindrical surface and said inner race (13) has an outer camming surface (14).

5. A roller clutch assembly as set forth in Claim 2, in which an extension (32) is provided on said stabilizer tab (26a) extending rearwardly from said roller (15a).

6. A roller clutch assembly as set forth in Claim 5, wherein said tab extension (32) extends over the approximate length of said spring (21a) to protect said accordion spring loops (23a).

0 237 243

**Fig.1.**

PRIOR ART

**Fig.2.**

**Fig.4.**

**Fig.3.**

European Patent Office

**EUROPEAN SEARCH REPORT**

Application number

EP 87 30 1812

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 095 954 (FERRIS)<br>* The whole document * | 1,5,6 | F 16 D 41/06 |
| Y | | 2,4 | |
| Y | US-A-3 902 580 (JOHNSON)<br>* The whole document * | 2,4 | |
| A | US-A-3 011 606 (FERRIS)<br>* Column 3; figures 3,6 * | 1 | |
| A | GB-A- 953 466 (BORG WARNER)<br>* The whole document * | 1 | |
| A | DE-B-2 928 587 (VOLKSWAGENWERK) | | TECHNICAL FIELDS SEARCHED (Int. Cl.4)<br><br>F 16 D 41/00 |

The present search report has been drawn up for all claims

| Place of search | Date of completion of the search | Examiner |
|---|---|---|
| THE HAGUE | 16-06-1987 | BALDWIN D.R. |